# EUROPÄISCHE PATENTSCHRIFT

(11) **EP 4 035 755 B1**
(45) Veröffentlichungstag und Bekanntmachung des Hinweises auf die Patenterteilung: **17.04.2024**
(21) Anmeldenummer: 21209935.2
(22) Anmeldetag: 23.11.2021
(51) Int. Cl.: B01D 36/04, B24B 55/12, B01D 21/00, B01D 21/02, B01D 21/24

(54) **VERFAHREN UND VORRICHTUNG ZUM AUFTRENNEN VON FLUIDBESTANDTEILEN**
METHOD AND DEVICE FOR SEPARATING FLUID COMPONENTS
PROCÉDÉ ET APPAREIL DE SEPARATION DES COMPOSANTS FLUIDE

(30) Priorität: 27.01.2021 DE 102021000392
(43) Veröffentlichungstag der Anmeldung: 03.08.2022
(73) Patentinhaber: Hydac Filtertechnik GmbH, 66280 Sulzbach/Saar (DE)
(72) Erfinder: Kleemann, Daniel, 57515 Alsting (FR); Nenno, Alexander, 66606 St. Wendel (DE); Schneider, André Michael, 66399 Mandelbachtal (DE); Morgens, Klaus, 54293 Trier (DE); Daufer, Stefan, 54290 Trier (DE)
(74) Vertreter: Bartels und Partner, Patentanwälte

(56) Entgegenhaltungen:
- WO-A1-2009/056152
- WO-A2-2015/158335
- CN-A- 101 992 423
- CN-A- 110 877 292
- DE-A1-102020 200 376

## Beschreibung

Die Erfindung betrifft eine Vorrichtung zum Auftrennen von Fluidbestandteilen mit den Merkmalen im Oberbegriff von Anspruch 1 sowie ein Verfahren unter Verwendung der Vorrichtung.

Durch DE 195 08 296 A1 ist ein Verfahren sowie eine Vorrichtung zur Phasenseparation bekannt, die dem Auftrennen eines Verunreinigungen aufweisenden Fluidgemisches in mindestens zwei seiner Bestandteile dienen, wobei mittels eines Phasentrenners der eine Unterphase bildende eine Bestandteil des Fluidgemisches von dem anderen eine Oberphase bildenden Bestandteil getrennt wird, wobei jeder abgetrennte Bestandteil in einer separaten Kreislaufführung jeweils einer Filtereinheit zugeführt wird, bei der als Filtrat die Phasen getrennt voneinander ausgeschieden und jeweils von einem zumindest teilweise die Verunreinigungen aufweisenden Konzentrat getrennt werden.

Die bekannte Vorrichtung zum Durchführen des Verfahrens weist demgemäß für jede Kreislaufführung einen Behälter auf, dessen Inhalt mittels einer Fördereinrichtung der Filtereinheit zuführbar ist, die eine Abgabemöglichkeit für das Filtrat aufweist, wobei über eine sich verzweigende Rohrleitung zumindest ein Teil des Fluidkonzentrats aus der Filtereinheit in den Behälter zurückfließt. Dergestalt ist es möglich, eine Auftrennung dahingehender Fluidgemische effizient und kostengünstig durchzuführen.

Die Unterphase ist bei den hier aufzutrennenden Gemischen meist durch wässrige Flüssigkeiten oder Wasser gebildet, wohingegen die Oberphase aus nichtwässrigen Flüssigkeiten besteht. Für das Abscheiden von partikulären Verunreinigungen aus einem Fluid ist das bekannte Verfahren nebst Vorrichtung zur Phasenseparation jedoch nicht geeignet.

Die DE 2020 200 376 A1 beschreibt eine Vorrichtung zum Auftrennen von Fluidbestandteilen mit den Merkmalen im Oberbegriff von Anspruch 1, wobei ein Aufnahmebehälter mit einem Zulauf für Unfiltrat und mit einem Ablauf für Filtrat vorhanden ist, wobei der Aufnahmebehälter in zwei Funktionsbereiche unterteilt ist, von denen der eine der Sedimentation und der andere der Filtration zwecks Abscheiden von Partikeln aus dem Unfiltrat dient, und wobei der Aufnahmebehälter eine Trennwand aufweist, die einen Aufnahmeraum für das Sediment begrenzt und die eine Fluidverbindung zu einem Filterraum herstellt, der einen Filter aufweist.

Weitere Vorrichtungen zum Auftrennen von Fluidbestandteilen gehen aus der WO 2015/158335 A2, der WO 2009/056152 A1, der CN 110 877 292 A und der CN 101 992 423 A hervor.

Ausgehend von diesem Stand der Technik liegt der Erfindung die Aufgabe zugrunde, eine Vorrichtung zu schaffen, mit dem sich auch mit partikulären Verunreinigungen versehene Fluide behandeln lassen, nebst einem Verfahren unter Verwendung der Vorrichtung.

Der erste Teil der Aufgabe wird durch eine Vorrichtung mit den Merkmalen von Anspruch 1 gelöst.

Gemäß dem Kennzeichen von Anspruch 1 ist vorgesehen, dass der Filter die Trennwand umgibt.

Das erfindungsgemäße Verfahren dient dem Auftrennen eines partikuläre Verunreinigungen aufweisenden Fluids in die Bestandteile Verunreinigungen und Fluid unter Verwendung der Vorrichtung mit zumindest den folgenden Verfahrensschritten:
- Zuführen des Fluids als Unfiltrat;
- Abscheiden von Partikeln vorgebbarer Größe mittels Sedimentation;
- Abscheiden von demgegenüber kleineren Partikeln mittels Filtration; und
- Abführen des Fluids als Filtrat.

Die erfindungsgemäße Vorrichtung, insbesondere zum Durchführen dieses Verfahrens, weist einen Aufnahmebehälter auf mit einem Zulauf für Unfiltrat und mit einem Ablauf für Filtrat, wobei der Aufnahmebehälter in zwei Funktionsbereiche unterteilt ist, von denen der eine der Sedimentation und der andere der Filtration zwecks Abscheiden von Partikeln aus dem Unfiltrat dient. Dergestalt lassen sich insbesondere Fluide mit einem relativ gesehen sehr niedrigen Volumenstrom von Partikelverschmutzung befreien, in dem beim Auftrennen den Partikeln ausreichend Zeit gegeben wird, sich durch Sedimentation, also durch Ausfällung aus dem Fluid unter dem Einfluss der Gewichtskraft, vom eigentlichen Fluid zu trennen. Demgegenüber kleinere und mithin leichtere Partikel lassen sich dann im Rahmen einer Filtration aus dem Fluidstrom noch vollends ausscheiden.

Die erfindungsgemäße Lösung kombiniert also eine Gewichtskraftabscheidung durch Sedimentation mit einer Partikelrückhaltung durch Filtration.

Als besonders geeignet hat sich das Verfahren nebst der Vorrichtung für eine Verwendung bei Gleitschleifverfahren bewährt. Das Gleitschleifen (Wikipedia) ist ein trennendes Verfahren zur Oberflächenbearbeitung von vorrangig metallischen Werkstücken, wobei die zu bearbeitenden Werkstücke zusammen mit Schleifkörpern in Form sogenannter Chips und meist mit einem Zusatzmittel in wässriger Lösung (compound) als Schüttgut in einen Behälter gegeben werden. Durch eine oszillierende oder rotierende Bewegung des Schleifbehälters entsteht eine Relativbewegung zwischen dem jeweiligen Werkstück und den Schleifkörpern, die einen Materialabtrag am Werkstück hervorrufen. Um das fluide respektive flüssige Schleifmittel regelmäßig bestehend aus Wasser mit dem jeweiligen Zusatzmittel einschließlich einem Korrosionsschutzmittel (compound) für solche Gleitschleifanlagen nach einem Gebrauch wiederverwenden zu können, dient das erfindungsgemäße Verfahren nebst Vorrichtung.

Auf die dahingehende Verwendung für Gleitschleifverfahren braucht aber die erfindungsgemäße Lösung nicht eingeschränkt zu werden, sondern kann vielmehr immer dort eingesetzt werden, wo Fluid-Schmutzgemische mit extrem hoher Schmutzkonzentration auftreten, die aus verfahrenstechnischen Gegebenheiten heraus mit sehr niedrigem Volumenstrom zu behandeln sind. Dergestalt ist das zum Filtrat abgereinigte Fluid wiedereinsetzbar und die zu entsorgende, reine Partikelmenge ist demgegenüber vom Volumen her gering bemessen, was im Rahmen einer weiteren Entsorgung hilft, die Umwelt zu entlasten.

Bei einer bevorzugten Ausführungsform des erfindungsgemäßen Verfahrens ist vorgesehen, dass das Zuführen des Unfiltrats unter Strömungsberuhigung mit einem Abgabeniveau oberhalb eines vorgebbaren Sedimentationsniveaus durchgeführt wird. Vorzugsweise entsteht dabei im Rahmen der Strömungsberuhigung eine radiale Strömung für das Fluid, was zu einer optimierten Partikelsedimentation führt.

Bei einer weiteren bevorzugten Ausführungsform des erfindungsgemäßen Verfahrens ist vorgesehen, dass das Abführen des Filtrats nach der Filtration mittels Saugwirkung durchgeführt wird. Je nach aufgebrachter Saugwirkung auf der Filtratseite lässt sich das Auftrennverfahren mit sehr niedrigem Volumenstrom durchführen, um dergestalt für die Sedimentation der Partikel hinreichend Absetzzeit zu schaffen. Im Rahmen der angesprochenen Strömungsberuhigung ist es dabei von Vorteil, wenn die Zufuhr von Unfiltrat und die Abfuhr von Filtrat an räumlich weit auseinanderliegenden Stellen stattfinden.

Bei einer weiteren bevorzugten Ausführungsform des erfindungsgemäßen Verfahrens ist vorgesehen, dass das Abgabeniveau des Unfiltrats bei fortlaufendem Betrieb unterhalb eines Fluidniveaus des Filtrats liegt und dass mit Ansteigen des Filtrat-Fluidniveaus ab einem vorgebbaren Schwellenwert überschüssiges Filtrat zur Bestimmung des Sedimentvolumens herangezogen wird. Ist hinreichend Sediment abgeschieden worden, steigt auf der Filtratseite zwangsläufig das Fluidniveau respektive der Flüssigkeitsspiegel an, was zum Anlass genommen werden kann, das abgeschiedene Sediment im Rahmen einer weiteren Entsorgung bei stillgesetztem Betrieb zu entfernen.

Bei einer weiteren bevorzugten Ausführungsform des erfindungsgemäßen Verfahrens ist vorgesehen, dass eine Auftrennung in zu sedimentierendes und zu filtrierendes Fluid bei fortlaufendem Betrieb unterhalb eines zuoberst liegenden Filtrat-Fluidniveaus durchgeführt wird. Dergestalt wird das von Partikeln abgereinigte Fluid als Reinfiltrat zuoberst aufschwimmend über einen Überlauf nach außen zwecks Durchführen einer Füllstandsbestimmung verdrängt.

Die bevorzugte Einrichtung zur Strömungsberuhigung bei der erfindungsgemäßen Vorrichtung weist eine Art Strömungskegel auf, der für eine homogene, radiale Einströmung in einen Aufnahmeraum des Aufnahmebehälters ausmündet, in dem die sedimentierten Partikel eine Art Schlammtrichter ausbilden.

Während im Rahmen der Sedimentation regelmäßig Partikel > 5 *µ*m abgeschieden werden, dient das in Fluidströmungsrichtung gesehen dahinterliegende Filterelement der Rückhaltung von Partikeln mit einer Größe < 5 *µ*m. Die angegebenen Größenwerte sind nur exemplarisch und sollen zum Ausdruck bringen, dass größere Partikel im Rahmen der Sedimentation und kleinere Partikelgrößen im Rahmen der Partikelfiltration abgeschieden werden. Der zum Einsatz kommende Filter bildet einen Korbfilter aus, dessen Filtermedium zur Vergrößerung der wirksamen Filterfläche plissiert ist.

Bei einer bevorzugten Ausführungsform der erfindungsgemäßen Vorrichtung ist ferner vorgesehen, dass der Aufnahmebehälter auf seiner Filtratseite einen Überlauf aufweist, der in einen Überlaufbehälter ausmündet, dessen Füllstand mittels eines Füllstandssensors überwacht ist. Zur Bestimmung des Sedimentationsvolumens ist im oberen Bereich des Aufnahmebehälters ein Überlauf angebracht. Das durch den sedimentierten Partikelschmutz verdrängte Fluid läuft in den Überlaufbehälter ab, wo der Füllstandssensor den Füllstand bestimmt, welcher mit einer entsprechenden Auswerteelektronik und mit entsprechenden Auswertealgorithmen zusammenwirkt, um dergestalt das Sedimentvolumen im schlammtrichterartigen Sedimentbereich festzustellen und damit dem Bediener die Zeit bis zur nächsten Entleerung des Aufnahmebehälters anzugeben.

Wie bereits dargelegt, lässt sich die Vorrichtung nebst Verfahren besonders gut einsetzen beim Abreinigen von Partikeln aus einem fluiden Schleifmedium im Rahmen des Durchführens des Gleitschleifverfahrens, wobei das dahingehende Abreinigen eine Auftrennung in die Fluidbestandteile Verunreinigungen und Fluid in Form des wässrigen Schleifmittels darstellt.

Im Folgenden wird das erfindungsgemäße Verfahren anhand einer Vorrichtung näher erläutert. Dabei zeigen in prinzipieller und nicht maßstäblicher Darstellung die
- Fig. 1: in der Art eines Längsschnitts die wesentlichen Komponenten der Auftrennvorrichtung als Ganzes; und
- Fig. 2: eine perspektivische Draufsicht auf die Vorrichtung nach der Fig. 1.

In den Figuren ist ein hohlzylindrischer Aufnahmebehälter 10 gezeigt mit einem Zulauf 12 für Unfiltrat und mit einem Ablauf 14 für Filtrat. Der hohlzylindrische Aufnahmebehälter 10 ist bodenseitig mit einer kreisförmigen Abschlussplatte 16 versehen und kopfseitig mit einer vergleichbaren weiteren Abschlussplatte 18, die mit ösenförmigen Handhabungshilfen 20 versehen ist zwecks Handhaben der Gesamtvorrichtung, beispielsweise mittels eines Transportkrans. Der Aufnahmebehälter 10 ist in zwei Funktionsbereiche 22, 24 unterteilt, von denen der eine 22 der Sedimentation und der andere 24 der Filtration zwecks Abscheiden von Partikeln aus dem Unfiltrat dient, das über den Zulauf 12 zugeführt wird.

Der Zulauf 12 für das Unfiltrat ist aus einer Einrichtung 26 zur Strömungsberuhigung des Unfiltratstroms gebildet, wobei die dahingehende Einrichtung 26 die obere oder weitere Abschlussplatte 18 durchgreift. Oberhalb der weiteren Abschlussplatte 18 weist die Einrichtung 26 einen Zulauftrichter 28 auf, der in ein Zulaufrohr 30 mit vorgebbarer Länge übergeht, das an seinem freien unteren Ende in einen Auslauftrichter 32 ausmündet, der als Strömungskegel für eine homogene, radiale Einströmung des Unfiltratstroms ins Innere 34 des Aufnahmebehälters 10 sorgt. Die dahingehende Zulaufrichtung für den Unfiltratstrom ist mit Pfeilen wiedergegeben, wobei der einzelne Strömungspfeil am Eingang des Zulauftrichters 28 die gesamte einströmende Fluidmenge widerspiegelt, die sich gemäß den darunter angeordneten Einzelpfeilen in Einzelströme, wie dargestellt, aufteilt. Der Pfeil im Ablauf 14 gibt die Strömungsrichtung für die Abgabe des Filtrats an.

Um die Strömungszufuhr und insbesondere die damit einhergehende Strömungsberuhigung nicht zu beeinträchtigen, ist der Ablauf 14 für den Filtratstrom, in Blickrichtung auf die Figur gesehen, an der unteren rechten Ecke des Aufnahmebehälters 10 angeordnet, wohingegen der Zulauf 12 sich in der gegenüberliegenden, oberen linken Ecke des Behälters 10 befindet. Der rohrförmige Sauganschluss als Ablauf 14 für das Filtrat durchgreift den Au-ßenumfangsmantel des Aufnahmebehälters 10 und mündet mit seinem einen freien Ende in einen hohlzylindrischen Filterraum 36 aus, der der Aufnahme von Filtrat dient. Das andere freie Ende des Sauganschlusses ist an eine nicht näher dargestellte Unterdruckeinrichtung angeschlossen, beispielsweise an eine Saugpumpe. Eine im Wesentlichen hohlzylindrisch ausgebildete Trennwand 38 im Aufnahmebehälter 10, die einen Aufnahmeraum 34 für das Sediment begrenzt, der dem Inneren des Aufnahmebehälters 10 entspricht, weist oben rechts eine fensterartige Ausnehmung 40 auf, die eine Fluidverbindung zu dem Filterraum 36 herstellt, der einen hohlzylindrischen Filter 42 aufweist, der die Trennwand 38 außenumfangsseitig mit radialem Abstand umfasst. Der Filter 42 weist ein plissiertes Filtermedium auf, das sich endseitig zwischen zwei Endkappen 46 erstreckt, die sich jeweils bodenseitig und kopfseitig an der unteren bzw. oberen, weiteren Abschlussplatte 16, 18 innenseitig abstützen und derart den Filter 42 im Aufnahmebehälter 10 festlegen. Der Aufnahmebehälter 10 mit seinen beiden Platten 16, 18 kann in Kunststoff- oder Blechbauweise ausgeführt sein. Zum Entfernen eines mit Partikelverschmutzung zugesetzten Filters 42 lässt sich dieser gegen ein Neuelement tauschen, wofür die obere Abschlussplatte 18 vom sonstigen Aufnahmebehälter 10 abgeschraubt werden kann. Die untere Abschlussplatte 16 hingegen kann mit dem Außenumfangsmantel des Behälters 10 fluiddicht verklebt oder verschweißt sein.

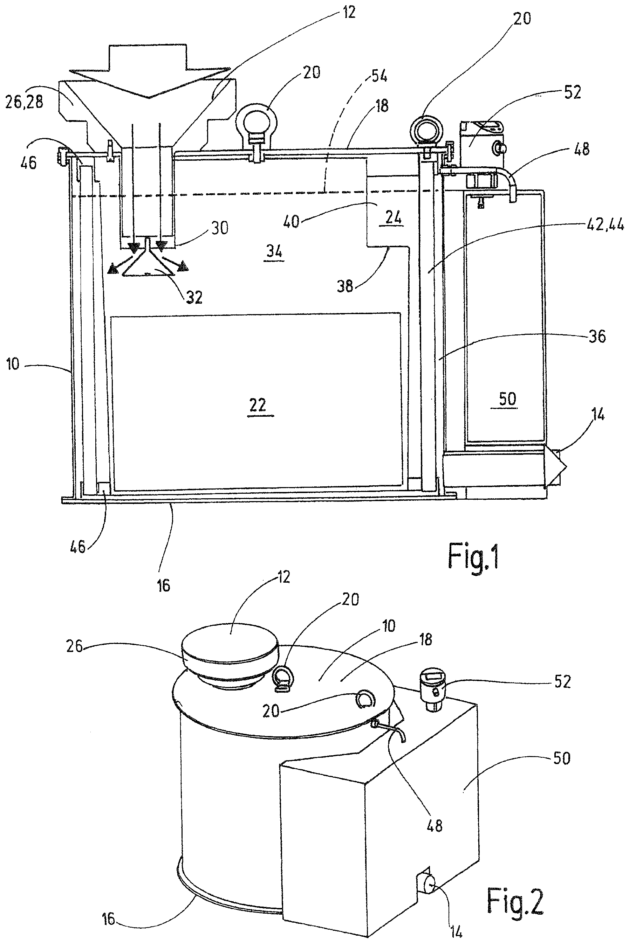

In seinem oberen Endbereich weist der Aufnahmebehälter 10 einen rohrförmigen Überlauf 48 auf, der wiederum möglichst weit von der Einrichtung 26 zur Strömungsberuhigung entfernt angeordnet ist. Der Überlauf 48 durchgreift in der Nähe der oberen Abschlussplatte 18 die außenumfangsseitige Behälterwand des Behälters 10 und mündet insoweit an dieser Stelle in den Filterraum 36 aus. Mit seinem anderen freien, nach unten abgebogenen Ende mündet der Überlauf 48 in einen kastenförmigen Überlaufbehälter 50 aus, dessen Füllstand mittels eines Füllstandssensors 52 überwacht ist. Der Überlaufbehälter 50 verbreitert sich gemäß der Darstellung nach der Fig. 2 flügelartig beidseitig nach außen hin und bildet insoweit einen Umfassungsraum aus für die Aufnahme von Teilen der zylindrischen Behälterwand des Behälter 10. In Blickrichtung auf die Fig. 2 gesehen, weist der Überlaufbehälter 50 bodenseitig einen nutförmigen Durchgriffskanal auf, der von dem rohrstutzenartigen Ablauf 14 nahezu abstandsfrei durchgriffen ist.

Als Füllstandssensor 52 kann ein sogenannter Niveauschalter ENS 3000 dienen, wie er von der Schutzrechtsinhaberin bezogen werden kann. Es handelt sich hierbei um einen elektronischen Niveauschalter mit integrierter Anzeigefunktion und neben dem gängigen Min.- und Max.-Schaltsignal ermöglicht eine Variante mit vier Schaltausgängen die Einstellung zusätzlicher Warnsignalmeldungen, um beispielsweise einen ungewollten Tanküberlauf oder ein Luftansaugen der Saugpumpe zu vermeiden. Der ENS 3000 ist sowohl für Öl als auch für Wasser ohne Weiteres einsetzbar und benötigt an sich keine bewegten Teile, die in Kontakt mit dem Medium im Überlaufbehälter 50 stehen müssten, um verlässlich zum Einsatz zu kommen. Der aufgezeigte Niveauschalter kann auch um einen Temperaturfühler ergänzt sein, um dergestalt individuell den ermittelten Messgrößen Niveau und Temperatur entsprechende Anzeigewerte für eine Auswerteelektronik oder dergleichen zur Verfügung stellen zu können.

Der erste Funktionsbereich 22 für die Partikel-Sedimentaufnahme ist symbolisch als Rahmen dargestellt, um zu verdeutlichen, in welch hohem Maße der Aufnahmebehälter 10 das Sediment aufnehmen kann. In Wirklichkeit gelangt der Sedimentschlamm über die Einrichtung 26 in der Art eines Schlammkegels in das Innere des Aufnahmebehälters 10, gebildet durch den Aufnahmeraum 34. Des Weiteren ist in den Aufnahmebehälter 10 eine fiktive Füllstandsniveaulinie 54 eingezeichnet, wie er im üblichen Betrieb mit der Vorrichtung auftritt und der den Füllstand mit sauberem Medium auf der Filtratseite respektive im Filterraum 36 darstellen soll.

Im Folgenden wird anhand der vorgestellten Vorrichtung nunmehr das erfindungsgemäße Verfahren näher erläutert. Das angesprochene Verfahren dient dem Auftrennen eines partikuläre Verunreinigungen aufweisenden Fluids in die Bestandteile Verunreinigungen und Fluid, wofür in einem ersten Schritt das Fluid als Unfiltrat über den Zulauf 12 in den Aufnahmebehälter 10 zugeführt wird. Der eingangsseitige Zulauftrichter 28 gibt das Unfiltrat über das Zulaufrohr 30 unter Vorbeiströmen an einem Auslauftrichter 32 in das Innere 34 des Aufnahmebehälters 10 ab. Dergestalt ist als Ganzes eine Einrichtung 26 zur Strömungsberuhigung geschaffen und die eingebrachten partikelartigen Verunreinigungen vorgebbarer Größe werden mittels Sedimentation im ersten Funktionsbereich 22 abgeschieden, wobei sich in diesem Funktionsbereich 22 eine Art Schlammkegel aufschütten lässt. Der für den ersten Funktionsbereich 22 fiktiv eingezeichnete, rechteckförmige Rahmen gibt einen Anhalt für das maximal mögliche Sedimentationsvolumen wieder, das in der Größenordnung der Hälfte des Volumens des Aufnahmebehälters 10 als Ganzes liegt. Im Rahmen der dahingehenden Schlammtrichterbildung werden Partikel, beispielsweise > 5 *µ*m, durch Sedimentation abgeschieden.

Demgegenüber kleinere Partikel, also im vorliegenden Fall < 5 *µ*m, schwimmen mit der Unfiltratflüssigkeit im Aufnahmebehälter 10 auf und gelangen über die fensterartige Ausnehmung 40 in der Trennwand 38 auf die Unfiltratseite für den Filter 42, der, wie dargelegt, mit radialem Abstand die ansonsten zylindrisch ausgebildete Trennwand 38 umfasst. Aufgrund des im Betrieb anstehenden Unterdrucks im Ablauf 14 gelangt dergestalt der Unfiltratstrom auf die Unfiltratseite des Filters 42 und wird dort in einem dritten Prozessschritt von den kleineren Partikeln befreit, die sich am Filtermedium 44 abscheiden. Das derart abfiltrierte Fluid gelangt dann als Filtratstrom in den Filterraum 36 des Aufnahmebehälters 10 und von dort über den Ablauf 14 nach außen. Das derart abgereinigte Filtrat kann dann erneut einer nicht näher dargestellten Maschine zugeführt werden, die beispielsweise das Durchführen eines Gleitschleifverfahrens für Werkstücke erlaubt. Insoweit bildet also das Abführen des Fluids als Filtrat den vierten Verfahrensschritt, der sich mit der Vorrichtung realisieren lässt. Damit der Ablauf 14 als Sauganschluss dienen kann, ist dieser an eine nicht näher dargestellte Unterdruckeinrichtung, wie eine Saugpumpe, angeschlossen, die im Betrieb der Vorrichtung zwecks Durchführen des Verfahrens graduell einen Unterdruck dergestalt ausbildet, dass das Fluid von Seiten des Zulaufes 12 in Richtung des Ablaufes 14 gezogen wird.

Mit zunehmender Sedimentierung von Partikelverunreinigungen ist es zwangsläufig, dass im Aufnahmebehälter 10 das Füllstandsniveau 54 ansteigt und beispielsweise eine Niveaulage einnimmt, wie sie in Fig. 1 dargestellt ist. Mit weiterer Sedimentabscheidung steigt das Füllstandsniveau 54 auf ein Niveau oberhalb der gezeigten Niveaulinie 54 weiter an, bis ein Ablauf des dahingehend abgereinigten Fluids über den Überlauf 48 in den Überlaufbehälter 50 erfolgt. Dank des Füllstandssensors 52 lässt sich dann das Fluidniveau im Überlaufbehälter 50 feststellen. Je mehr Fluidmenge im Überlaufbehälter 50 abgeschieden wird, umso mehr Sediment hat sich im Aufnahmebehälter 10 angesammelt. Ist der Aufnahmebehälter 10 insoweit befüllt, muss der Betrieb unterbrochen werden. Mit Entfernen der weiteren Abschlussplatte 18 lässt sich der korbartige Filter 42 zusammen mit der Trennwand 38 aus dem Aufnahmebehälter 10 entfernen, wobei die untere Endkappe 46 insoweit den bodenseitigen Abschluss für den auszubringenden Schlammtrichter bildet. Nach entsprechendem Abreinigen von Sediment und gegebenenfalls mit Austausch des Filters 42 lassen sich die gesäuberten bzw. ausgetauschten Komponenten wieder in den Aufnahmebehälter 10 einbringen. Nach Anbringen der weiteren Abschlussplatte 18 steht einer erneuten Inbetriebnahme nichts mehr im Wege, wobei die Einrichtung 26 am oberen Deckelteil, in Form der weiteren Abschlussplatte 18, verbleiben kann.

Besonders bevorzugt wird die erfindungsgemäße Vorrichtung nebst dem zugehörigen Verfahren im Rahmen sogenannter Gleitschleifverfahren eingesetzt. Gleitschleifmaschinen, beispielsweise in Form sogenannter Tellerfliehkraftanlagen, weisen Schleifbehälter auf, in denen die zu behandelnden Werkstücke, das Schleifmittel sowie das Schleiffluid eingeführt werden. Durch Erzeugen einer Rotation im Schleifbehälter erfolgt ein ständig sich wiederholender Kontakt zwischen Werkstück und Schleifmittel, was eine Oberflächenbearbeitung für das jeweilige Werkstück erlaubt. Ein dahingehender Gleitschleifprozess wird normalerweise durch einen Werkstückwechsel/Schleifkörperwechsel unterbrochen und solche Gleitschleifmaschinen können durchaus ca. 20 h/Tag in Betrieb sein. Dennoch ist die entstehende Schmutzmenge relativ niedrig und kann beispielsweise 10 kg/Tag betragen, wobei dann ca. 80 % Schleifmittelabrieb sind und ca. 20 % Werkstückabrieb.

Die zu behandelnden Werkstücke sind regelmäßig aus einem Stahlwerkstoff gebildet und die eingesetzten Schleifmittel können unterschiedlich sein; meistens bestehen sie aus Keramikchips und als eigentliches Schleifmittel wird Aluminiumoxid eingesetzt. Das im Gleitschleifprozess zugesetzte Fluid ist Wasser oder eine wässrige Flüssigkeit, versetzt mit einem Korrosionsschutzmittel (compound). Das dahingehende Fluid zusammen mit der Schmutzmenge wird dann als sogenanntes Unfiltrat dem Zulauf 12 der Vorrichtung zugeführt und das angesprochene Auftrenn-Verfahren durchgeführt. Auf der Filtratseite ergeben sich dabei gleichfalls geringe Abgabemengen über den Ablauf 14, regelmäßig ein Fluidvolumen im vorliegenden Beispielsfall von 8 bis 14 l/h, was einen sehr niedrigen Volumenstrom ergibt.

Die erfindungsgemäße Vorrichtung nebst Verfahren ist nicht auf die Behandlung von Gleitschleifmitteln eingeschränkt, sondern kann vielmehr immer dort verwendet werden, wo Fluid-Schmutzgemische mit extrem hoher Schmutzkonzentration auftreten und sich ein Saugbetrieb mit sehr niedrigem Volumenstrom realisieren lässt.

## Patentansprüche

1. Vorrichtung zum Auftrennen von Fluidbestandteilen, wobei ein Aufnahmebehälter (10) mit einem Zulauf (12) für Unfiltrat und mit einem Ablauf (14) für Filtrat vorhanden ist, wobei der Aufnahmebehälter (10) in zwei Funktionsbereiche (22, 24) unterteilt ist, von denen der eine (22) der Sedimentation und der andere (24) der Filtration zwecks Abscheiden von Partikeln aus dem Unfiltrat dient, und wobei der Aufnahmebehälter (10) eine Trennwand (38) aufweist, die einen Aufnahmeraum (34) für das Sediment begrenzt und die eine Fluidverbindung (40) zu einem Filterraum (36) herstellt, der einen Filter (42) aufweist, **dadurch gekennzeichnet, dass** der Filter (42) die Trennwand (38) umgibt.

2. Vorrichtung nach Anspruch 1
**dadurch gekennzeichnet, dass** der
Zulauf (12) für das Unfiltrat aus einer Einrichtung (26) zur Strömungsberuhigung gebildet ist; und dass der Ablauf (14) für Filtrat als Sauganschluss konzipiert ist, der an eine Unterdruckquelle, wie eine Saugpumpe, anschließbar ist.

3. Vorrichtung nach Anspruch 1 oder 2
**dadurch gekennzeichnet, dass**
der Aufnahmebehälter (10) auf seiner Filtratseite einen Überlauf (48) aufweist, der in einen Überlaufbehälter (50) ausmündet, dessen Füllstand mittels eines Füllstandssensors (52) überwacht ist.

4. Verfahren zum Auftrennen eines partikuläre Verunreinigungen aufweisenden Fluids in die Bestandteile Verunreinigungen und Fluid unter Verwendung einer Vorrichtung nach einem der vorstehenden Ansprüche mit zumindest den folgenden Verfahrensschritten:
- Zuführen des Fluids als Unfiltrat;
- Abscheiden von Partikeln vorgebbarer Größe mittels Sedimentation;
- Abscheiden von demgegenüber kleineren Partikeln mittels Filtration; und
- Abführen des Fluids als Filtrat.

5. Verfahren nach Anspruch 4, **dadurch gekennzeichnet, dass** das Zuführen des Unfiltrats unter Strömungsberuhigung mit einem Abgabeniveau oberhalb eines vorgebbaren Sedimentationsniveaus durchgeführt wird.

6. Verfahren nach Anspruch 4 oder 5, **dadurch gekennzeichnet, dass** das Abführen des Filtrats nach der Filtration mittels Saugwirkung durchgeführt wird.

7. Verfahren nach einem der Ansprüche 4 bis 6, **dadurch gekennzeichnet, dass** das Abgabeniveau des Unfiltrats bei fortlaufendem Betrieb unterhalb eines Fluidniveaus (54) des Filtrats liegt; und dass mit Ansteigen des Filtrat-Fluidniveaus (54) ab einem vorgebbaren Schwellenwert überschüssiges Filtrat zur Bestimmung des Sedimentvolumens herangezogen wird.

8. Verfahren nach einem der Ansprüche 4 bis 7, **dadurch gekennzeichnet, dass** eine Auftrennung in zu sedimentierendes und zu filtrierendes Fluid bei fortlaufendem Betrieb unterhalb eines zuoberst liegenden Filtrat-Fluidniveaus (54) durchgeführt wird.

## Claims

1. Apparatus for separating fluid components, wherein a receiving tank (10) is provided with an inlet (12) for unfiltered medium and with an outlet (14) for filtrate, wherein the receiving tank (10) is divided into two functional areas (22, 24), of which the one (22) is used for sedimentation and the other (24) for filtration for the purpose of separating particles from the unfiltered medium, and wherein the receiving tank (10) has a separating wall (38) which defines a receiving chamber (34) for the sediment and which establishes a fluid connection (40) to a filter chamber (36), which filter chamber comprises a filter (42), **characterised in that** the filter (42) surrounds the separating wall (38).

2. Apparatus according to claim 1, **characterised in that** the inlet (12) for the unfiltered medium is formed from a device (26) for flow stabilisation; and **in that** the outlet (14) for filtrate is designed as a suction connection which can be connected to a vacuum source, such as a suction pump.

3. Apparatus according to claim 1 or 2, **characterised in that** the receiving tank (10) has an overflow (48) on its filtrate side which opens out into an overflow tank (50), the level of which is monitored by means of a level sensor (52).

4. Method for separating a fluid comprising particulate impurities into the components impurities and fluid using an apparatus according to one of the preceding claims, having at least the following method steps:
- Feeding in the fluid as unfiltered medium;
- Separating particles of a predefinable size by means of sedimentation;
- Separating comparatively smaller particles by means of filtration; and
- Discharging the fluid as filtrate.

5. Method according to claim 4, **characterised in that** the unfiltered medium is fed in under flow stabilisation with a discharge level above a predefinable sedimentation level.

6. Method according to claim 4 or 5, **characterised in that** the filtrate is discharged after filtration by means of suction.

7. Method according to one of claims 4 to 6, **characterised in that** the discharge level of the unfiltered medium is below a fluid level (54) of the filtrate during continuous operation; and **in that**, as the filtrate fluid level (54) rises above a predefinable threshold value, excess filtrate is used to determine the sediment volume.

8. Method according to one of claims 4 to 7, **characterised in that** separation into fluid to be sedimented and fluid to be filtered is carried out below an uppermost filtrate fluid level (54) during continuous operation.

## Revendications

1. Installation de séparation de constituants d'un fluide, dans laquelle il y a un récipient (10) de réception ayant une entrée (12) pour du non filtrat et une sortie (14) pour du filtrat, dans lequel le récipient (10) de réception est subdivisé en deux parties (22, 24) fonctionnelles, dont l'une (22) sert à la sédimentation et dont l'autre (24) sert à la filtration en vue de séparer des particules du non filtrat, et dans laquelle le récipient (10) de réception a une cloison (38), qui délimite un espace (34) de réception du sédiment et qui ménage une communication (40) fluidique avec un espace (36) de filtre, qui comporte un filtre (42), **caractérisée en ce que** le filtre (42) entoure la cloison (38) .

2. Installation suivant la revendication 1, **caractérisée en ce que** l'entrée (12) du non filtrat est formée d'un dispositif (26) de tranquillisation de l'écoulement ; et **en ce que** la sortie (14) du filtrat est conçue sous la forme d'un raccord d'aspiration, qui peut être raccordé à une source de dépression, comme une pompe aspirante.

3. Installation suivant la revendication 1 ou 2, **caractérisée en ce que** le récipient (10) de réception a, sur son côté du filtrat, un trop plein (48), qui débouche dans un récipient (50) de trop plein, dont le niveau est commandé au moyen d'un capteur (52) de niveau.

4. Procédé de séparation d'un fluide, ayant des impuretés en particules, en les constituants impuretés et fluide, en utilisant une installation suivant l'une des revendications précédentes comprenant au moins les stades de procédé suivants :
- arrivée du fluide comme non filtrat ;
- séparation de particules d'une dimension pouvant être donnée à l'avance au moyen d'une sédimentation ;
- séparation de particules relativement plus petites au moyen d'une filtration ; et
- sortie du fluide comme filtrat.

5. Procédé suivant la revendication 4, **caractérisé en ce que** l'on effectue l'entrée du non filtrat avec tranquillisation de l'écoulement à un niveau de distribution au-dessus d'un niveau de sédimentation pouvant être donné à l'avance.

6. Procédé suivant la revendication 4 ou 5, **caractérisé en ce que** l'on effectue la sortie du filtrat après la filtration au moyen d'un effet d'aspiration.

7. Procédé suivant l'une des revendications 4 à 6, **caractérisé en ce que** le niveau de distribution du non filtrat, lors du fonctionnement en continu, est en-dessous d'un niveau (54) du fluide ; et **en ce que**, au fur et à mesure que le niveau (54) du fluide du filtrat augmente, à partir d'une valeur de seuil pouvant être donnée à l'avance, on tire parti du filtrat en excès pour la détermination du volume du sédiment.

8. Procédé suivant l'une des revendications 4 à 7, **caractérisé en ce que** l'on effectue une séparation en du fluide à sédimenter et du fluide à filtrer, lors du fonctionnement en continu, en-dessous d'un niveau (54) de fluide de filtrat se trouvant tout en haut.
